# EUROPÄISCHE PATENTSCHRIFT

(11) **EP 0 525 484 B1**
(45) Veröffentlichungstag und Bekanntmachung des Hinweises auf die Patenterteilung: **04.01.1995**
(21) Anmeldenummer: 92111838.6
(22) Anmeldetag: 11.07.1992
(51) Int. Cl.: B60R 16/02, B62D 1/06

(54) **Schaltungsanordnung für ein elektrisch beheizbares Lenkrad im Kraftfahrzeug**
Control circuit for an electrically heated steering wheel in an automotive vehicle
Circuit de commande pour un volant de direction chauffant électriquement dans un véhicule automobile

(30) Priorität: 31.07.1991 DE 4125293
(43) Veröffentlichungstag der Anmeldung: 03.02.1993
(73) Patentinhaber: Delphi Automotive Systems Deutschland GmbH, D-42369 Wuppertal (DE)
(72) Erfinder: Woeste, Guido, Dipl.-Ing., W-5820 Gevelsberg (DE)
(74) Vertreter: Priebisch, Rüdiger

(56) Entgegenhaltungen:
- DE-A- 3 037 816
- DE-A- 3 814 420

## Beschreibung

Die Erfindung bezieht sich auf eine Schaltungsanordnung für ein elektrisch beheizbares Lenkrad im Kraftfahrzeug mit einem Hupentaster im Lenkrad, der über elektrische Leitungen einerseits unmittelbar am Bordnetz und andererseits an eine Hupe angeschlossen ist, mit einer Heizeinheit im Lenkrad, die parallel zum Hupentaster angeschlossen ist, und mit einer außerhalb des Lenkrades angeordneten, die Spannungsversorgung der Heizeinheit steuernden Schaltvorrichtung, die mit einer Spannungsversorgung und einem Masseanschluß des Bordnetzes verbunden ist, wobei die Schaltvorrichtung so ausgelegt ist, daß sie im Falle der Verbindung eines Ausganges direkt mit Masse die Spannungsversorgung für die Heizeinheit sperrt.

Aus der DE-PS 3037816 ist es bekannt, die Heizeinheit mit der Hupe in Reihe zu schalten. Bei eingeschalteter Heizeinheit fließt der elektrische Strom auch durch die Hupe. Diese wird jedoch nicht erregt, da dieser Strom hierzu nicht ausreicht. Durch diesen geringen Strom dauert es lange, bis die Heizeinheit ihre Betriebstemperatur erreicht. Das Lenkrad wird langsam aufgeheizt.

Die DE-OS 3814420 beschreibt ein elektronisches Relais, welches an den Stromkontakt des Hupenstromkreises im Nebenschluß angeschlossen ist, so daß Hupe und Lenkradheizung gleichzeitig betätigbar sind. Bei Ausfall des elektronischen Relais ist die Hupfunktion nicht mehr gewährleistet. Diese Unterlage bildet den Oberbegriff des Anspruchs 1.

Aufgabe der Erfindung ist es, eine Schaltungsanordnung für ein elektrisch beheizbares Lenkrad zu schaffen, die unter Aufrechterhaltung der Betriebssicherheit des Systems in die vorhandene Hupenschaltung integriert werden kann.

Die Erfindung löst die Aufgabe dadurch, daß der einzige Ausgang der Schaltvorrichtung mit der durchgehenden Leitung zwischen Hupenschalter und Hupe verbunden ist und die Spannungsversorgung der Schaltvorrichtung mit einer Sicherung geschützt ist. Die Heizeinheit und die Hupe werden über eine gemeinsame Leitung bzw. gemeinsam über einen Schleifring am Lenkrad betrieben. Bei Anwendung der erfindungsgemäßen Schaltungsanordnung ist es möglich, ein Lenkrad ohne Heizung durch ein Lenkrad mit Heizung zu ersetzen, ohne daß hierfür zusätzliche, durch die Lenksäule führende elektrische Leitungen für die Heizeinheit gelegt werden müssen. Die über das Bordnetz versorgte Schaltvorrichtung wird lediglich an die bereits vorhandene Leitung zwischen dem Huptaster und der Hupe angeschlossen, d. h. es entsteht ein Abzweig. So erfolgt keine Zwischenschaltung (Reihenschaltung) auf dieser Hupenleitung. Die Funktion der Hupe ist ständig gewährleistet. Selbst bei niedriger Umgebungstemperatur (unter -10° C)ist die Schaltungsvorrichtung leistungsstark genug, um das Lenkrad schnell aufzuheizen.

Die Schaltvorrichtung steuert die Versorgungsspannung der Heizeinheit. Ist die Heizeinheit eingeschaltet, fließt kein Strom über die Hupe, so daß keine unnötige Belastung der zur Hupe führenden Leitung entsteht. Bei Auslösung der Hupfunktion wird der entstehende Kurzschlußstrom von der Schaltvorrichtung frühzeitig abgeschaltet, damit die Schaltungsanordnung nicht unnötig und funktionsschädigend belastet wird.

Durch den Einsatz eines Operationsverstärkers und eines POWER MosFET wird die Versorgungsspannung überwacht. Zum einen wird eine Entladung der Fahrzeugbatterie bei nicht laufendem Motor verhindert und zum anderen die Heizeinheit erst eingeschaltet, wenn die Schaltvorrichtung die Versorgung sicherstellt. Die Schaltung ermöglicht außerdem einen Schutz gegen die Verpolung der Elektronik und dämpft Störungen aus der Spannungsversorgung des Bordnetzes. Alternativ wäre eine Schaltvorrichtung mit einem ProFET und einem Widerstand realisierbar.

Eine Sicherung innerhalb oder außerhalb der Schaltvorrichtung in der Spannungsversorgung stellt sicher, daß bei einem Defekt (Kurzschluß des FET) die Hupfunktion erhalten bleibt.

Eine Hupe im Kraftfahrzeug wird oft über ein Relais geschaltet. Die erfindungsgemäße Schaltungsanordnung ist universell einsetzbar, d.h. es muß nicht berücksichtigt werden, ob ein Relais vorhanden ist oder nicht. Ein bereits eingebautes Relais behält die ursprünglichen Funktionen bei und wird in die Schaltungsanordnung integriert. Der Montageaufwand ist daher gering.

Die Erfindung ist anhand der in den Zeichnungen dargestellten Ausführungsbeispiele näher erklärt.
- Figur 1: zeigt ein Blockschaltbild der erfindungsgemäßen Schaltungsanordnung.
- Figur 2: zeigt ein Schaltbild einer Schaltvorrichtung aus Figur 1.
- Figur 3: zeigt ein Blockschaltbild der erfindungsgemäßen Schaltungsanordnung gemäß Anspruch 3.

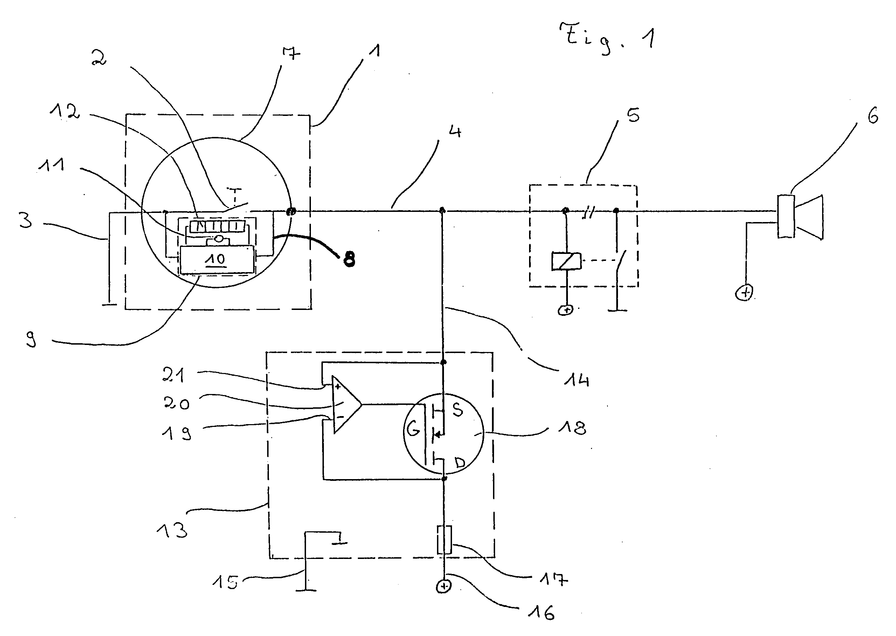

In Figur 1 ist schematisch ein Lenkrad 1 eines Kraftfahrzeuges dargestellt. Das Lenkrad 1 enthält mindestens einen Hupentaster 2, der über eine elektrische Leitung 3 mit Masse und über eine elektrische Leitung 4 mit einem Hupenrelais 5 (falls vorhanden) oder direkt mit der Hupe 6 verbunden ist. Die Leitung 3 ist in der nicht dargestellten Lenksäule des Kraftfahrzeuges verlegt. Die Leitung 4 verläuft teilweise in der Lenksäule und enthält in ihrem Verlauf einen Schleifring 7, über den sie bei jeder Stellung des Lenkrades 1 geschlossen ist. Die Leitung 4 führt über die Hupe 6 zum Zündschalter (nicht dargestellt) und über diesen zum plus-pol des Bordnetzes. In einem zum Hupentaster 2 parallen Leitungszweig 8 liegt die Heizeinheit 9. Die Heizeinheit 9 besteht aus einem Thermostatmodul 10 und daran angeschlossen aus einem Temperaturfühler 11 und einem Heizwiderstand 12, der in das Lenkrad 1 eingebettet ist. Zwischen dem Schleifring 7 und dem Relais 5 bzw. der Hupe 6 ist eine Schaltvorrichtung 13 über eine elektrische Leitung 14 an die Leitung 4 angeschlossen. Die Schaltvorrichtung 13 ist über eine elektrische Leitung 15 mit Masse und über eine elektrische Leitung 16 mit dem Bordnetz des Kraftfahrzeuges verbunden. Die Leitung 16 führt in der Schaltvorrichtung über eine Sicherung 17 zum Drainanschluß eines POWER MosFET 18 und einem Minuseingang 19 eines Operationsverstärkers 20. Der Pluseingang 21 des Operationsverstärkers 20 führt zur Leitung 14 und an den Source-Anschluß S des POWER MosFET 18. Der Ausgang 22 des Operationsverstärkers 20 ist mit dem Gate-Anschluß G des POWER MosFET 20 verbunden. Die Schaltvorrichtung 13 ist auf einer gedruckten Schaltung realisiert und z. B. im Motorraum oder in der Zentralelektrik des Kraftfahrzeuges untergebracht.

Bei geschlossenem Zündschalter wird der Heizwiderstand 12 im Lenkrad 1 mit einem Strom beaufschlagt. Über einen Temperaturfühler 11 unter dem Heizwiderstand 12 erhält das Thermostatmodul 10 die Temperaturinformation, nach der innerhalb eines Fensters (z.B. 15/25 °C) ein- und ausgeschaltet wird. Beim Betätigen des Hupentasters 2 wird der entstehende Kurzschluß gegen Masse von der Schaltvorrichtung 13 erkannt, welche innerhalb von ca. 20 µs bei einem maximalen Stromanstieg auf ca. 30 A abschaltet. Dieser sehr kurze Stromimpuls ist für den Schleifring 7 und den Hupentaster 2 unkristisch. Beim Loslassen den Hupentasters 2 wird der Spannungsanstieg auf der Hupenleitung 4 von der Schaltvorrichtung 13 erkannt, so daß sich diese beim Überschreiten einer Schwellspannung von z. B. 10 Volt wieder einschaltet. Eine Schmelzsicherung 17 innerhalb oder außerhalb der Schaltvorrichtung 13 stellt sicher, daß bei einem Defekt die Hupfunktion erhalten bleibt. Diese Sicherung 17 kann als Leiterbahn in der Schaltvorrichtung 13 ausgeführt sein.

Zusätzlich wird die Versorgungsspannung überwacht, wodurch zum einen eine Entladung der Fahrzeugbatterie bei nicht laufendem Motor verhindert wird und zum anderen die Heizeinheit 9 erst einschaltet, wenn die Schaltvorrichtung 13 die Versorgung sichergestellt. Bei einer defekten Schaltvorrichtung 13 und geöffnetem Hupentaster 2 liegt die Versorgungsspannung vom Bordnetz über die niederohmige Hupe an der Heizeinheit. Die Heizeinheit wird in diesem Fall in definierten Abständen kurz eingeschaltet, jedoch beim Absinken der Spannung sofort wieder abgeschaltet, so daß die Hupe dabei nicht hörbar angeregt wird.

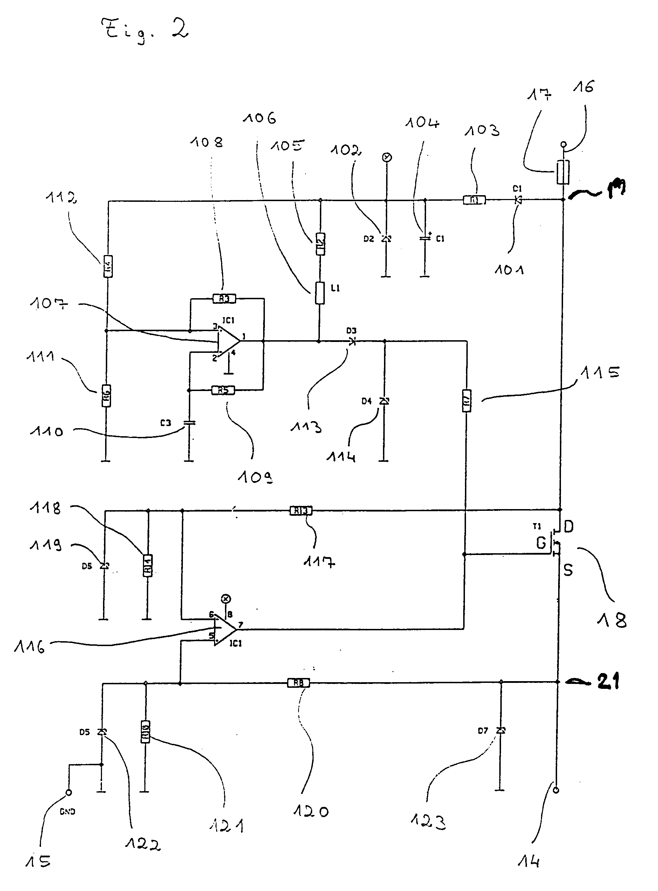

Das Schaltbild der Schaltvorrichtung ist in Figur 2 dargestellt. Die Diode D 1 101 sorgt für einen Verpolungsschutz für die Elektronik. Die Zenerdiode D 2 102 begrenzt die Versorgungsspannung auf 10 Volt, wobei der Strom über einen Widerstand R 1 103 aus der Bordspannung zugeführt wird. Der Kondensator C1 104 dämpft Störungen vom Bordnetz wie zum Beispiel kurzzeitige Spannungseinbrüche.

Die Bauteile 105 - 115 bilden eine Ladungspumpe. Die Widerstände R 3, R 5, R 6, R 4 108, 109, 111, 112, der Kondensator C 3 110 und der Komparator IC 1 107 bilden einen Rechteckoszillator. Da der Komparator IC 1 107 einen Open-Kollektor-Ausgang besitzt, ist ein Pull-up Widerstand R 2 105 erforderlich. Eine zu diesem Widerstand R 2 105 in Reihe geschaltete Induktivität L 1 106 erzeugt beim Öffnen des Ausgangstransistors im Komparator IC 1 107 eine positive Spannungsspitze, welche über eine Diode D 3 113 und eine Zenerdiode D 4 114 auf maximal 27 Volt begrenzt wird. Mit diesen Spannungsspitzen wird über den Widerstand R 7 115 das Gate G des POWER MosFET 18, welcher eine Gate-Source-Kapazität von ca. 1 bis 2 nF hat, aufgeladen, wenn der Ausgangstransistor des zweiten Kompensators IC 1 116 gesperrt ist. Die Diode D 3 29 verhindert die Entladung des Gate G über den Ausgangstransistor des Komparators IC 1 107.

Die Strom- bzw. Spannungsüberwachung wird mit den Widerständen R 13, R 14, R 8, R 10 117, 118, 120, 121 und dem Komparator IC 1 116 realisiert. Die Zenerdioden D 6, D 5 119, 122 schützen die Eingänge des Komparators IC 1 116 gegen Überspannung, die über die Widerstände R 13, R 8 117, 120 vom Bordnetz zu den Eingängen gelangen können. Der Komperator ICI 116 vergleicht über die Spannungsteiler R 13/R 14 117/118 und R 8/R 10 120/121 die Spannungspegel an Drain D und Source S des POWER MosFET 18.

Bei eingeschalteter Zündung und nicht betätigter Hupe 6 liegt über der Hupe 6 oder eine evtl. vorhandene Relais-Spule 5 an dem Source-Anschluß S die Bordspannung an, d.h. die Spannung zwischen Drain D und Source S ist 0 Volt. Schaltet sich die Heizeinheit 9 neu ein, so fällt an der Drain-Source-Strecke des POWER MosFET 18, der einen definierten Drain-Source-Widerstand besitzt, eine Spannung ab. Die Spannungsteiler R 13/R 14 117/118 und R 8/R 10 120/121 sind so eingestellt, daß der POWER MosFET 18 bei einem Strom von ca. 10 A noch nicht gesperrt wird, wobei die Spannung am Plus-Eingang noch geringfügig höher liegt, als die am Minus-Eingang. Wird nun der Hupentaster 2 betätigt, so steigt zunächst der Strom über die Drain-Source-Strecke des POWER MosFET 18 an, so daß sich der Spannungsabfall über dieser Strecke vergrößert und der Plus-Eingang des Komparators IC 1 116 negativer wird als der Minus-Eingang. Der Open-Kollektor-Ausgang des Komparators IC I 116 wird gegen Masse geschaltet und entlädt so die Drain-Source-Kapazität des POWER MosFET 18. Durch diesen Entladevorgang wird das Abschalten des POWER MosFET 18 verzögert, so daß des Strom bis ca. 30 A ansteigen kann bis das Gerät entladen ist und der POWER MosFET 18 abschaltet. Wird der Hupentaster 2 losgelassen, so steigt die Spannung am Source-Anschluß S wieder an und der POWER MosFET 18 wird durch Öffnen des Ausgangstransistors im Komparator IC 1 116 wieder eingeschaltet, wenn die Polarität an den Eingängen wieder wechselt. Die Strom- /Spannungsüberwachung funktioniert durch die Messung der Versorgungsspannung am Drainanschluß D des POWER MosFET 18 nahezu bordspannungsunabhängig, wenn diese über 10 Volt liegt. Bei einer defekten Sicherung 17 und geöffnetem Hupentaster 2 liegt die Versorgungsspannung vom Bordnetz über die niederohmige Hupe an der Heizeinheit. Die Heizeinheit wird in diesem Fall in definierten Abständen kurz eingeschaltet, jedoch beim Absinken der Spannung auf der Hupenleitung 4 sofort wieder abgeschaltet. Dabei sind die Schaltzeiten des Thermostatmoduls 10 so gewählt, daß die Hupe 6 kein Geräusch abgibt. Die Zenerdiode D 7 123 schützt die Schaltvorrichtung 13 vor Überspannungsspitzen, die beim Abschalten der Hupe 6 entstehen. Bei höheren Anforderungen z. B. "Load-Dump-Schutz" kann diese durch einen Varistor ersetzt werden.

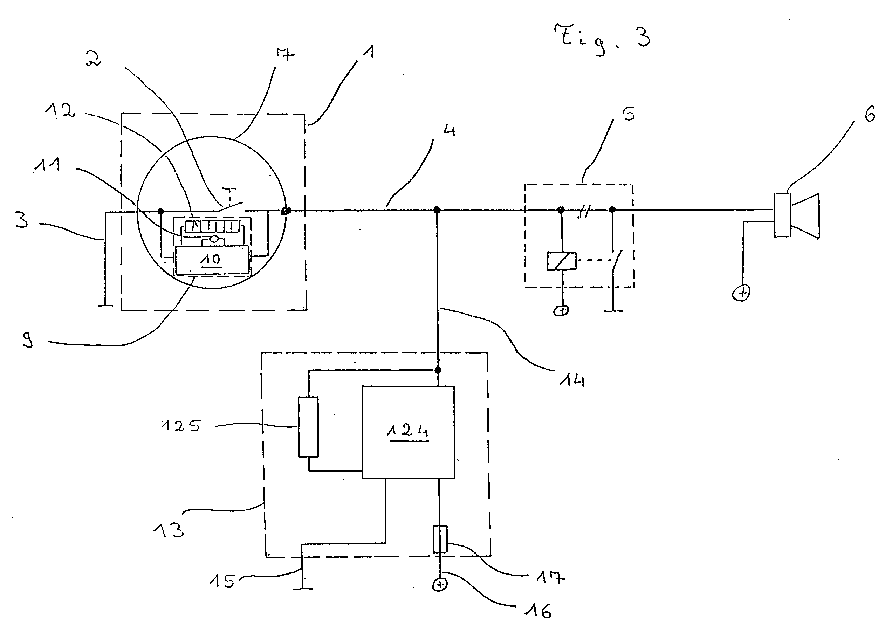

Alternativ wäre eine Schaltungsvorrichtung nach Figur 3 realisierbar. Die Schaltvorrichtung 13 besteht hier aus einem ProFET 124 und einem Widerstand 125. Bei dem hier eingesetzten ProFET 124 (protected FET) handelt es sich um einen FET mit integrierter Ladungspumpe, Überstromabschaltung und Übertemperaturabschaltung. Der Eingang des ProFET 124 ist mit einem Widerstand 125 gegen den Ausgang geschaltet, so daß der ProFET 124 bei nicht betätigter Hupe 6 über diesen Widerstand 125 eingeschaltet wird. Bei Betätigen der Hupe 6 wird der Überstrom erkannt und mit einer Zeitverzögerung abgeschaltet. Dabei steigt der Strom nach ca. 200 µ s bis auf ca. 90 A. Bis zur Freigabe des Hupentasters 2 wird der Eingang über diese und den Eingangswiderstand gegen Masse gehalten und bleibt gesperrt. Wird der Taster 2 losgelassen, so steigt die Spannung am Eingang über den Widerstand 125 und der proFET 124 schaltet wieder ein.

### Bezugszeichenliste:

- 1: Lenkrad
- 2: Hupentaster
- 3: elektrische Leitung zur Masse des Bordnetzes
- 4: elektrische Leitung, Hupenleitung
- 5: Huprelais
- 6: Hupe
- 7: Schleifring
- 8: zum Hupentaster 2 paralleler Leitungszweig
- 9: Heizeinheit
- 10: Thermostatmodul
- 11: Temperaturfühler
- 12: Heizwiderstand
- 13: Schaltvorrichtung
- 14: elektrische Leitung, Ausgang der Schaltvorrichtung 13
- 15: Masse-Leitung der Schaltvorrichtung 13
- 16: Versorgungsleitung der Schaltvorrichtung 13
- 17: Sicherung
- 18: POWER MosFET
- 19: Minuseingang des Operationsverstärkers 20
- 20: Operationsverstärker
- 21: Pluseingang des Operationsverstärkers 20
- 22: Ausgang des Operationsverstärkers 20
- 101: Diode D 1
- 102: Zenerdiode D 2
- 103: Widerstand R 1
- 104: Kondensator C 1
- 105: Widerstand R 2
- 106: Induktivität L 1
- 107: Komparator IC 1
- 108: Widerstand R 3
- 109: Widerstand R 5
- 110: Kondensator C 3
- 111: Widerstand R 6
- 112: Widerstand R 4
- 113: Diode D 3
- 114: Zenerdiode D 4
- 115: Widerstand R 7
- 116: Komparator IC 1
- 117: Widerstand R 13
- 118: Widerstand R 14
- 119: Zenerdiode D 6
- 120: Widerstand R 8
- 121: Widerstand R 10
- 122: Zenerdiode D 5
- 123: Zenerdiode D 7
- 124: ProFET
- 125: Widerstand R 15
- D: Drain (-Anschluß) des POWER MosFET 18
- G: Gate (-Anschluß) des POWER MosFET 18
- S: Source (-Anschluß) des POWER MosFET 18

## Patentansprüche

1. Schaltungsanordnung für ein elektrisch beheizbares Lenkrad (1) im Kraftfahrzeug mit einem Hupentaster (2) im Lenkrad (1), der über elektrische Leitungen (3, 4) einerseits unmittelbar am Bordnetz und andererseits an eine Hupe (6) angeschlossen ist, mit einer Heizeinheit (9) im Lenkrad (1), die parallel zum Hupentaster (2) angeschlossen ist, und mit einer außerhalb des Lenkrades (1) angeordneten, die Spannungsversorgung der Heizeinheit (9) steuernden Schaltvorrichtung (13), die mit einer Spannungsversorgung und einem Masseanschluß des Bordnetzes verbunden ist, wobei die Schaltvorrichtung (13) so ausgelegt ist, daß sie im Falle der Verbindung eines Ausganges (14) direkt mit Masse die Spannungsversorgung für die Heizeinheit (9) sperrt, dadurch gekennzeichnet, daß der einzige Ausgang (14) der Schaltvorrichtung (13) mit der durchgehenden Leitung (4) zwischen Hupenschalter (2) und Hupe (6) verbunden ist und die Spannungsversorgung der Schaltvorrichtung (13) mit einer Sicherung (17) geschützt ist.

2. Schaltungsanordnung nach Anspruch 1, dadurch gekennzeichnet, daß die Schaltvorrichtung (13) aus einem POWER MosFET (18) und einem Operationsverstärker (20) besteht.

3. Schaltungsanordnung nach Anspruch 1 oder 2 dadurch gekennzeichnet, daß die Schaltvorrichtung (13) aus einem ProFET (124) und einem Widerstand (125) besteht.

4. Schaltungsanordnung nach einem der Ansprüche 1 bis 3, dadurch gekennzeichnet, daß zwischen dem Ausgang (14), der Schaltvorrichtung (13) und der Hupe (6) ein Hupenrelais (5) geschaltet ist.

## Claims

1. A circuit for an electrically heatable steering wheel (1) in a motor vehicle having a horn button (2) in the steering wheel (1), which horn button is connected via electrical lines (3, 4) on the one hand directly to the power supply and on the other hand to a horn (6), with a heating unit (9) in the steering wheel (1), which is connected parallel to the horn button (2), and with a switching device (13), which is arranged outside the steering wheel (1), controls the voltage supply to the heating unit (9) and is connected to a voltage supply and an earth terminal of the power supply, the switching device (13) being designed in such a manner that it blocks the voltage supply to the heating unit (9) in the event of a connection of an output (14) directly to earth, characterised in that the single output (14) of the switching device (13) is connected to the continuous line (4) between the horn button (2) and the horn (6), and the voltage supply of the switching device (13) is protected by a fuse (17).

2. A circuit according to claim 1, characterised in that the switching device (13) comprises a POWER MOSFET (18) and an operational amplifier (20).

3. A circuit according to claim 1 or 2, characterised in that the switching device (13) comprises a PROFET (124) and a resistor (125).

4. A circuit according to one of claims 1 to 3, characterised in that a horn relay (5) is incorporated between the output (14) [of] the switching device (13) and the horn (6).

## Revendications

1. Circuit de commande pour un volant de direction (1) chauffable électriquement d'un véhicule automobile comprenant un bouton de commande (2) de klaxon dans le volant de direction (1) qui est raccordé par des conducteurs électriques d'une part directement du réseau de bord et d'autre part à un klaxon (6), comprenant une unité de chauffage (9) dans le volant de direction (1) qui est raccordée en parallèle au bouton de commande (2) de klaxon, et comportant un dispositif de commutation (13) monté à l'extérieur du volant de direction (1) et commandant l'alimentation en tension de l'unité de chauffage (9), qui est relié à une alimentation en tension et à un raccord à la masse du réseau de bord, le dispositif de commutation (13) étant constitué de manière qu'en cas de liaison d'une sortie (14) directement avec la masse, l'alimentation en tension de l'unité de chauffage (9) soit coupée, caractérisé en ce que l'unique sortie (14) du dispositif de commutation (13) est reliée à un conducteur direct (4) entre le bouton de commande de klaxon (2) et le klaxon (6) et l'alimentation en tension du dispositif de commutation (13) est protégée par un fusible (17).

2. Circuit de commande selon la revendication 1, caractérisé en ce que le dispositif de commutation (13) est constitué par un MosFET de puissance (18) et par un amplificateur opérationnel (20).

3. Circuit de commande selon la revendication 1 ou 2, caractérisé en ce que le dispositif de commutation (13) est constitué par un proFET (124) et par une résistance (125).

4. Circuit de commande selon l'une quelconque des revendications 1 à 3, caractérisé en ce qu'un relais de klaxon (5) est monté entre la sortie (14) du dispositif de commutation (13) et le klaxon (6).
